# EUROPÄISCHE PATENTSCHRIFT

(11) **EP 2 817 197 B1**
(45) Veröffentlichungstag und Bekanntmachung des Hinweises auf die Patenterteilung: **25.05.2016**
(21) Anmeldenummer: 13705394.8
(22) Anmeldetag: 13.02.2013
(51) Int. Cl.: B62D 7/22, B60R 25/021

(54) **LENKWELLE FÜR EIN KRAFTFAHRZEUG**
STEERING SHAFT FOR A MOTOR VEHICLE
ARBRE DE DIRECTION POUR VÉHICULE À MOTEUR

(30) Priorität: 21.02.2012 DE 102012101388
(43) Veröffentlichungstag der Anmeldung: 31.12.2014
(73) Patentinhaber: ThyssenKrupp Presta Aktiengesellschaft, 9492 Eschen (LI)
(72) Erfinder: KORNMAYER, Andreas, 88214 Ravensburg (DE); HEHLE, Karl-Mathias, A-6912 Hörbranz (AT)
(74) Vertreter: Hofmann, Ralf U.
(86) Internationale Anmeldenummer: PCT/EP2013/000411
(87) Internationale Veröffentlichungsnummer: WO 2013/124042

(56) Entgegenhaltungen:
- EP-A1- 1 553 005
- DE-A1- 10 326 120
- DE-A1-102004 019 093
- DE-A1-102007 000 936
- US-A1- 2002 190 450

## Beschreibung

Die Erfindung bezieht sich auf eine Lenksäule für ein Kraftfahrzeug mit einer Lenkwelle, welche einen hinteren Lenkwellen-Abschnitt, der geradlinig verläuft und um eine Längsmittelachse drehbar ist und an dem an einem hinteren Ende ein Lenkrad montierbar ist, und zumindest einen weiteren Lenkwellen-Abschnitt umfasst, der mit dem hinteren Lenkwellen-Abschnitt über ein Kardangelenk verbunden ist, welches eine hintere Gelenkgabel, eine vordere Gelenkgabel und ein die hintere Gelenkgabel und die vordere Gelenkgabel verbindendes Zapfenkreuz umfasst, wobei zur Dämpfung von über die Lenkwelle übertragenen Vibrationen eine Dämpfungseinrichtung vorhanden ist, die ein inneres Dämpferteil, welches eine im Querschnitt durch die Dämpfungseinrichtung gesehen von der Kreisform abweichende äußere Umfangskontur aufweist, ein das innere Dämpferteil umgebendes äußeres Dämpferteil, welches eine im Querschnitt durch die Dämpfungseinrichtung gesehen von der Kreisform abweichende innere Umfangskontur aufweist, und ein zwischen dem inneren Dämpferteil und dem äußeren Dämpferteil angeordnetes elastomeres Dämpfungsmaterial umfasst.

Lenkwellen von Kraftfahrzeugen dienen zur Übertragung der Drehbewegung von einem Lenkrad zu einem Lenkgetriebe. Solche Lenkwellen weisen herkömmlicherweise mehrere gerade Abschnitte auf, die jeweils durch ein Kardangelenk verbunden sind, wobei ein (bezogen auf die Vorwärts-Fahrtrichtung) hinterer Lenkwellen-Abschnitt an das Lenkrad anschließt und von einer Manteleinheit drehbar gelagert ist. Um im Falle eines Fahrzeugcrashes ein Zusammenschieben des hinteren Lenkwellen-Abschnitts zu ermöglichen, besitzt dieser zwei gegeneinander teleskopierbare Teilstücke. Über ein erstes Kardangelenk der Lenkwelle schließt an den hinteren Lenkwellen-Abschnitt ein mittlerer Lenkwellen-Abschnitt an, an welchen, wiederum über ein Kardangelenk, ein vorderer Lenkwellen-Abschnitt anschließt, der an das Lenkgetriebe angeschlossen ist. Der mittlere und/oder vordere Lenkwellen-Abschnitt können ebenfalls teleskopierbar ausgebildet sein. Der mittlere Lenkwellen-Abschnitt kann auch entfallen, sodass an das erste Kardangelenk direkt der vordere Lenkwellen-Abschnitt anschließt. Die Lenkwelle zusammen mit den diese lagernden und tragenden Teilen, die mit dem Fahrzeugchassis verbunden werden, wird üblicherweise als Lenksäule bezeichnet. Um eine Anpassung an die Sitzposition des Fahrers zu ermöglichen, sind solche Lenksäulen häufig verstellbar ausgebildet, wobei die Verstellbarkeit eine Längenverstellung (unter Verschiebung des hinteren Endes des hinteren Lenkwelle-Abschnitts in Richtung der Längsmittelachse des hinteren Lenkwellen-Abschnitts) und/oder eine Höhen- bzw. Neigungsverstellung (unter Verschwenkung des hinteren Lenkwellen-Abschnitts um eine horizontale, rechtwinkelig zur Längsmittelachse des hinteren Lenkwellen-Abschnitts stehende Achse) umfassen kann.

Um über die Lenkwelle übertragene Vibrationen zu dämpfen, sind Dämpfungseinrichtungen bekannt. So geht aus der EP 1 45 572 A1 eine im vorderen Lenkwellen-Abschnitt angeordnete Dämpfungseinrichtung hervor. Diese umfasst ein inneres und ein äußeres Dämpferteil, zwischen denen ein elastomeres Dämpfungsmaterial angeordnet ist, wobei die Dämpferteile jeweils von einem Endabschnitt eines Teilstücks des vorderen Lenkwellen-Abschnitts gebildet werden und von der Kreisform abweichende Querschnittskonturen aufweisen, um einen Formschluss bezüglich einer Drehbewegung auszubilden.

Aus der EP 1 260 725 A2 und JP 10-019054 A gehen in ein Kardangelenk integrierte Dämpfungseinrichtungen zum Einsatz in einer Lenkwelle hervor. Gezeigt sind innere und äußere Dämpferteile mit wellenförmigen Konturen, zwischen denen ein elastomeres Dämpfungsmaterial angeordnet ist.

Aus der GB 897 771 B geht eine in einer Motor-Antriebswelle angeordnete Dämpfungseinrichtung hervor, die erste und zweite Dämpferteile umfasst, von denen eines oder beide von der Kreisform abweichende Konturen aufweisen und zwischen denen ein elastomeres Dämpfermaterial liegt.

Die US 2002/0190450 A1 zeigt eine Lenksäule der eingangs genannten Art mit einem hinteren Lenkwellen-Abschnitt, an welchem das Lenkrad angebracht ist, und einem, in Fahrtrichtung gesehen, davor liegenden weiteren Lenkwellen-Abschnitt. Zwischen diesen Lenkwellen-Abschnitten befindet sich ein Kardangelenk. Der vordere Lenkwellen-Abschnitt weist eine Dämpfungseinrichtung mit inneren und äußeren Dämpferteilen und einem dazwischen liegenden elastomeren Dämpfungsmaterial auf, wobei die Teile durch von der Kreisform abweichende Querschnitte drehfest miteinander verbunden sind.

Aus der DE 10 2007 000 936 A1 geht eine Lenksäule hervor, welche eine elektrische Hilfskrafteinrichtung aufweist, wobei der von der Servolenkung induzierte Körperschall durch eine Anordnung verschiedener Dämpfungselemente gedämmt ist. Unter anderem ist in der Lenkwelle eine Dämpfungseinrichtung mit einem inneren Dämpferteil, einem äußeren Dämpferteil und einem dazwischen liegenden elastomeren Dämpfungsmaterial angeordnet, wobei die Teile durch von der Kreisform abweichende Querschnitte drehfest miteinander verbunden sind.

Aufgabe der Erfindung ist es eine vorteilhafte Lenksäule der eingangs genannten Art bereitzustellen, bei der über die Lenkwelle übertragene Vibrationen in effektiver und zweckmäßiger Weise gedämpft werden. Erfindungsgemäß gelingt dies durch eine Lenksäule mit den Merkmalen des Anspruchs 1.

Bei der Lenksäule gemäß der Erfindung ist die Dämpfungseinrichtung in den hinteren Lenkwellen-Abschnitt integriert, wobei das innere und das äußere Dämpferteil um die Längsmittelachse des hinteren Lenkwellen-Abschnitts drehbar sind.

Wenn man also der Lenkwelle ausgehend von ihrem hinteren Ende, an welchem das Lenkrad befestigt wird, bis zu ihrem vorderen Ende, an welchem sie am Lenkgetriebe angebracht wird, folgt, so weist die Lenkwelle zunächst einen geradlinig verlaufenden, um eine Längsmittelachse drehbaren hinteren Lenkwellen-Abschnitt auf, im Bereich von dessen Längserstreckung die Dämpfungseinrichtung liegt. Es folgt dann ein Kardangelenk und im Anschluss an dieses zumindest ein weiterer geradlinig verlaufender Abschnitt der Lenkwelle. Im Sinne der Erfindung kann auch anstelle eines Kardangelenkes ein anderes Gelenk, beispielsweise ein homokinetisches Gelenk im Lenkstrang angeordnet sein. Wenn weiterhin der Begriff Kardangelenk eingesetzt wird, so ist dieser stets als Synonym für ein entsprechendes Gelenk, das Drehmomente bei verschiedenen Abwinkelungen des Triebstranges übertragen kann, gemeint. Primär und bevorzugt ist allerdings das klassische Kardangelenk, das auch unter dem Namen Universalgelenk bekannt ist, gemeint.

Die Dämpfungseinrichtung weist bezogen auf die Richtung der Längsmittelachse des hinteren Lenkwellen-Abschnitts günstigerweise einen Abstand von der an den hinteren Lenkwellen-Abschnitt angeschlossenen hinteren Gelenkgabel des Kardangelenks auf, wobei dieser Abstand vorzugsweise mindestens dem direkt im Anschluss an die hintere Gelenkgabel gemessenen Durchmesser des von der hinteren Gelenkgabel fortführenden Wellenteils des hinteren Lenkwellen-Abschnitts entspricht.

Durch die erfindungsgemäße Anordnung wird eine vorteilhafte Integrierung in die Lenksäule ermöglicht, wobei der insgesamte für die Lenksäule benötigte Bauraum gering gehalten werden kann. Die lenkradseitig der Dämpfungseinrichtung liegende Erstreckung der Lenkwelle wird gering gehalten, sodass eine geringe Restlänge der Lenkwelle erreicht wird, über welche auf die Lenkwelle übertragene Vibrationen, beispielsweise auch in Form von Körperschall, ungedämpft auf das Lenkrad oder Strukturbauteile des Kraftfahrzeugs übertragen werden.

Erfindungsgemäß ist das Dämpferteil derart ausgebildet, dass das äußere Dämpferteil eine im Querschnitt durch die Dämpfungseinrichtung gesehen von der Kreisform abweichende äußere Umfangskontur aufweist, mit der es mit einer im Querschnitt durch die Dämpfungseinrichtung gesehen von der Kreisform abweichenden inneren Umfangskontur eines hülsenförmigen Abschnitts eines ersten Welltenteils des hinteren Lenkwellen-Abschnitts in einem in Bezug auf die Drehrichtung um die Längsmittelachse formschlüssigen Eingriff steht. Durch diese hülsenförmige Umschließung wird eine besonders kompakte und vibrationsdämmende Einrichtung geschaffen. Dabei ist es vorteilhaft, wenn das erste Wellenteil von der Dämpfungseinrichtung in axialer Richtung des hinteren Lenkwellen-Abschnitts absteht, d.h. das erste Wellenteil überragt die Dämpfungseinrichtung in axialer Richtung.

Eine mögliche Ausbildung der Erfindung sieht vor, dass die Lenksäule eine elektrische Hilfskrafteinrichtung aufweist. Solche elektrischen Hilfskrafteinrichtungen dienen zur Unterstützung der vom Fahrer ausgeübten Lenkkraft und/oder stellen hilfskraftbetriebene Lenkwinkelüberlagerungseinrichtungen dar. Die Dämpfungseinrichtung liegt hierbei günstigerweise zwischen dem hinteren Ende des hinteren Lenkwellen-Abschnitts und der elektrischen Hilfskrafteinrichtung. Wenn man also der Lenkwelle ausgehend von ihrem hinteren Ende bis zu ihrem vorderen Ende folgt, so schließt an das hintere Ende zuerst der geradlinige hintere Lenkwellen-Abschnitt an. An einer Stelle von dessen Längserstreckung ist die Dämpfungseinrichtung angeordnet. Weiter weg vom hinteren Ende der Lenkwelle wirkt die Hilfskrafteinrichtung mit der Lenkwelle zusammen, vorzugsweise immer noch im hinteren Lenkwellen-Abschnitt. An seinem vorderen Ende ist der hintere Lenkwellen-Abschnitt an das erste Kardangelenk angeschlossen, auf welches ein weiterer Lenkwellen-Abschnitt folgt. Von der Hilfskrafteinrichtung auf die Lenkwelle übertragene Vibrationen werden somit von der Dämpfungseinrichtung gedämpft, bevor sie auf das Lenkrad übertragen werden können.

Zur Ausbildung einer in Bezug auf die Drehrichtung um die Längsmittelachse des ersten Lenkwellen-Abschnitts formschlüssigen Verbindung zwischen dem inneren Dämpferteil und dem äußeren Dämpferteil über das dazwischenliegende elastomere Dämpfungsmaterial ist günstigerweise vorgesehen, dass im Querschnitt durch die Dämpfungseinrichtung gesehen das innere Dämpferteil eine von der Kreisform abweichende äußere Umfangskontur, das äußere Dämpferteil eine von der Kreisform abweichende innere Umfangskontur und das dazwischenliegende elastomere Dämpfungsmaterial eine mit der äußeren Umfangskontur des inneren Dämpferteils korrespondierende, von der Kreisform abweichende innere Umfangskontur und eine mit der inneren Umfangskontur des äußeren Dämpferteils korrespondierende von der Kreisform abweichende äußere Umfangskontur aufweist.

Zusätzlich zur genannten Dämpfungseinrichtung können ein oder mehrere weitere Dämpfungseinrichtungen in der Lenkwelle angeordnet sein. Die Anordnung kann hierbei im ersten Lenkwellen-Abschnitt und/oder in einem anderen Lenkwellen-Abschnitt und/oder in einem zwei Lenkwellen-Abschnitte verbindenden Kardangelenk sein.

Mit Vorteil ist der hintere Lenkwellen-Abschnitt über zumindest ein vorderes Drehlager drehbar gelagert ist, welches zwischen der Dämpfungseinrichtung und dem Kardangelenk liegt. Weiter ist zu bevorzugen, dass der hintere Lenkwellen-Abschnitt zumindest über ein hinteres Drehlager drehbar gelagert ist, welches zwischen der Dämpfungseinrichtung und dem hinteren Ende des hinteren Lenkwellen-Abschnitts liegt. Es kann hierbei auch eine gute koaxiale Ausrichtung der Dämpfungseinrichtung erreicht werden.

Der Einsatz der erfindungsgemäßen Lehre ist auch für eine Lenksäule geeignet, die zumindest in ihrer Länge verstellbar ist, wobei der hintere Lenkwellen-Abschnitt zwei gegeneinander teleskopierbare Wellenteile umfasst.

Vorteilhafterweise können in allen Ausführungsformen der Erfindung Dämpfungseinrichtungen eingesetzt sein, bei denen im Querschnitt durch die Dämpfungseinrichtung gesehen die innere Umfangskontur des äußeren Dämpferteils mehrere in Umfangsrichtung um die Längsmittelachse des hinteren Lenkwellen-Abschnitts voneinander beabstandete radial nach innen vorspringende innere Erhebungen aufweist, zwischen denen innere Vertiefungen der inneren Umfangskontur des äußeren Dämpferteils liegen, und die äußere Umfangskontur des inneren Dämpferteils mehrere in Umfangsrichtung um die Längsmittelachse voneinander beabstandete radial nach außen vorspringende äußere Erhebungen aufweist, zwischen denen äußere Vertiefungen der äußeren Umfangskontur des inneren Dämpferteils liegen, wobei die äußeren Erhebungen der äußeren Umfangskontur des inneren Dämpferteils in die inneren Vertiefungen der inneren Umfangskontur des äußeren Dämpferteils ragen. Insbesondere ist eine Ausbildung des Dämpfers von Vorteil, bei der der Winkelbereich, über den sich eine jeweilige äußere Erhebung der äußeren Umfangskontur des inneren Dämpferteils in Umfangsrichtung um die Längsmittelachse erstreckt, kleiner als der jeweilige Winkelbereich ist, über den sich eine jeweilige äußere Vertiefung der äußeren Umfangskontur des inneren Dämpferteils in Umfangsrichtung um die Längsmittelachse erstreckt.

Eine mögliche Ausbildung sieht vor, dass im Querschnitt durch die Dämpfungseinrichtung gesehen die äußere Umfangskontur des inneren Dämpferteils gekrümmte erste Abschnitte aufweist, welche die äußeren Erhebungen bilden, wobei die ersten Abschnitte einen ersten Krümmungsradius besitzen oder die von den ersten Abschnitten gebildeten äußeren Erhebungen in einem ersten Krümmungsradius einbeschrieben sind, und zweite Abschnitte aufweist, welche zwischen den ersten Abschnitten in den Bereichen der äußeren Vertiefungen liegen und welche einen zweiten Krümmungsradius besitzen, der größer als der erste Krümmungsradius ist, oder welche geradlinig verlaufen. Dabei ist es zu bevorzugen, wenn der zweite Krümmungsradius mehr als doppelt so groß, vorzugsweise mehr als dreimal so groß, wie der erste Krümmungsradius ist. Wenn zuvor angeführt ist, dass die von den ersten Abschnitten gebildeten Erhebungen in einem Krümmungsradius einbeschrieben sein können, so ist damit der Radius des kleinsten Kreises gemeint, der um die jeweilige Erhebung gelegt werden kann.

In einigen Anwendungsfällen kann es zur Erleichterung der Montage vorgesehen sein, dass das innere Dämpferteil eine im Querschnitt gesehen von der Kreisform abweichende innere Umfangskontur aufweist, mit der es mit einer im Querschnitt gesehen von der Kreisform abweichenden äußeren Umfangskontur eines Abschnitts eines zweiten Wellenteils des hinteren Lenkwellen-Abschnitts in einem im Bezug auf die Drehrichtung um die Längsmittelachse formschlüssigen Eingriff steht. Auch hier kann es vorgesehen sein, dass das zweite Wellenteil von der Dämpfungseinrichtung in axialer Richtung des hinteren Lenkwellen-Abschnitts absteht.

Mit Vorteil kann die Lenksäule derart ausgebildet sein, dass das zweite Wellenteil mit einem dritten Wellenteil drehfest verbunden ist, wobei das dritten Wellenteil vom zweiten Wellenteil in axialer Richtung des hinteren Lenkwellen-Abschnitts absteht.

Wenn in dieser Schrift im Zusammenhang mit der Lenksäule bzw. Lenkwelle von "vorne" und "hinten" die Rede ist, so ist dies in Bezug auf die Vorwärts-Fahrtrichtung bzw. in Bezug auf den Abstand zur Fahrzeugfront zu verstehen.

Wenn in dieser Schrift im Zusammenhang mit dem hinteren Lenkwellen-Abschnitt oder mit der Dämpfungseinrichtung von "innen" und "außen" die Rede ist, so ist dies auf die radiale Lage relativ zur Längsmittelachse des hinteren Lenkwellen-Abschnitts bezogen. Ein weiter innen liegendes Teil weist also einen kleineren Abstand von der Längsmittelachse auf als ein weiter außen liegendes Teil.

### (weiter auf Seite 8 der ursprünglichen Beschreibung)

Weitere Vorteile und Einzelheiten der Erfindung werden im Folgenden anhand der beiliegenden Zeichnung erläutert. In dieser zeigen:
Fig. 1 eine Schrägsicht eines an das hintere Ende der Lenkwelle anschließenden Teils der Lenkwelle mit den die Lenkwelle lagernden und tragenden Teilen, in einer Schrägsicht;
Fig. 2 eine Seitenansicht;
Fig. 3 eine Ansicht von unten;
Fig. 4 einen Längsmittelschnitt durch die im Bereich des hinteren Lenkwellen-Abschnitts liegenden Teile entlang einer Schnittlinie AA von Fig. 3;
Fig. 5 eine vergrößerte Darstellung der Lenkwelle im Bereich der Dämpfungseinrichtung in einem Längsmittelschnitt entsprechend Fig. 4;
Fig. 6 einen Schnitt entlang der Linie BB von Fig. 4;
Fig. 7 einen an ein hinteres Ende anschließenden Teil einer Lenkwelle mit den diese lagernden und tragenden Teilen entsprechend einer zweiten Ausführungsform, in Seitenansicht;
Fig. 8 die Teile von Fig. 7 in einer Schrägsicht;
Fig. 9 die zweite Ausführungsform im Bereich des hinteren Lenkwellen-Abschnitts im Längsmittelschnitt dargestellt;
Fig. 10 einen vergrößerten Ausschnitt von Fig. 9;
Fig. 11 eine Schrägsicht eines Teils der Vorrichtung gemäß der zweite Ausführungsform;
Fig. 12 eine Explosionsdarstellung von Teilen der Lenkwelle;
Fig. 13 einen Längsmittelschnitt durch die Teile entsprechend Fig. 12;
Fig. 14 eine Schrägsicht einer etwas modifizierten weiteren Ausführungsform;
Fig. 15 und 16 Darstellungen analog Fig. 12 und 13 noch einer weiteren modifizierten Ausführungsform;
Fig. 17 eine Darstellung analog Fig. 14 noch einer weiteren modifizierten Ausführungsform;
Fig. 18 eine Darstellung analog Fig. 2 noch einer weiteren modifizierten Ausführungsform.

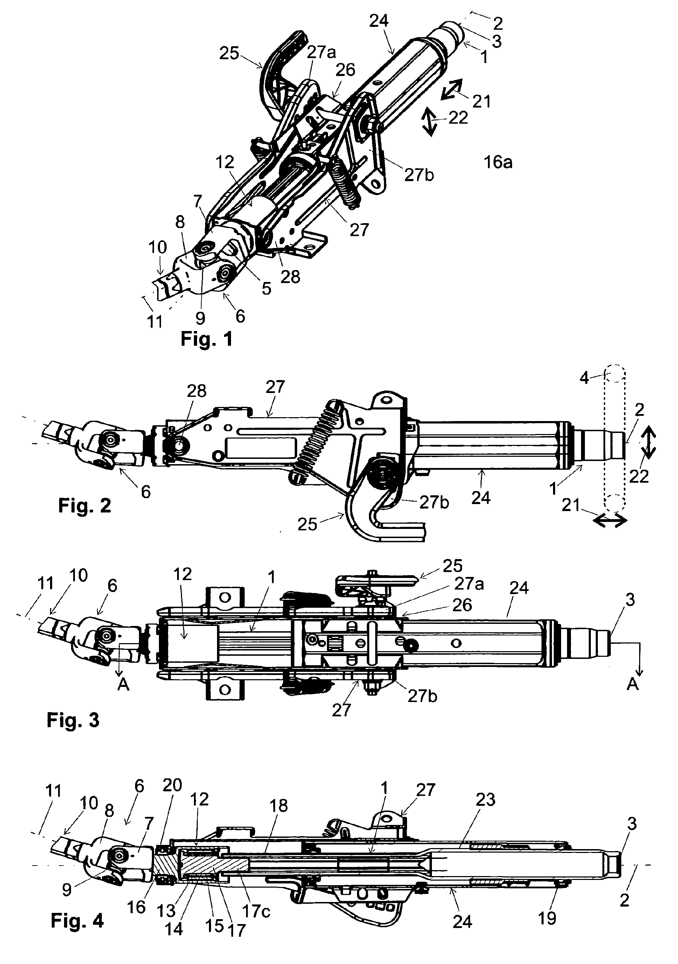

Ein erstes Ausführungsbeispiel der Erfindung ist in den Fig. 1 bis 6 dargestellt.

Die Lenksäule weist eine Lenkwelle mit einem hinteren Lenkwellen-Abschnitt 1 auf, der geradlinig verläuft und um eine Längsmittelachse 2 drehbar ist. Am hinteren Ende 3 des hinteren Lenkwellen-Abschnitts 1 ist ein nur in Fig. 2 durch strichlierte Linien schematisch angedeutetes Lenkrad 4 montierbar.

Der hintere Lenkwellen-Abschnitt erstreckt sich von einem hinteren Ende 3 geradlinig bis zu einem vorderen Ende 5, im Bereich von dem der hintere Lenkwellen-Abschnitt 1 mit einem Kardangelenk 6 der Lenkwelle verbunden ist. Das Kardangelenk 6 umfasst eine hintere Gelenkgabel 7, eine vordere Gelenkgabel 8 und ein die hintere mit der vorderen Gelenkgabel gelenkig verbindendes Zapfenkreuz 9. Die hintere Gelenkgabel 7 ist am hinteren Lenkwellen-Abschnitt 1 festgelegt. Die vordere Gelenkgabel 8 ist an einem weiteren Lenkwellen-Abschnitt 10 festgelegt. Dieser erstreckt sich wiederum geradlinig entlang einer Längsmittelachse 11, die mit der Längsmittelachse 2 des hinteren Lenkwellen-Abschnitts 1 einen Winkel ≠ 0° einschließt, wobei die Abweichung von der parallelen Lage dieser beiden Längsmittel-achsen 2, 11 insbesondere mehr als 20° beträgt.

Der weitere Lenkwellen-Abschnitt 10 kann direkt mit einem nicht dargestellten Lenkgetriebe verbunden sein oder er kann über ein weiteres Kardangelenk mit noch einem weiteren geradlinig verlaufenden Lenkwellen-Abschnitt verbunden sein, der seinerseits mit dem Lenkgetriebe verbunden ist. Eine Zwischenschaltung noch weiterer Lenkwellen-Abschnitte ist grundsätzlich möglich.

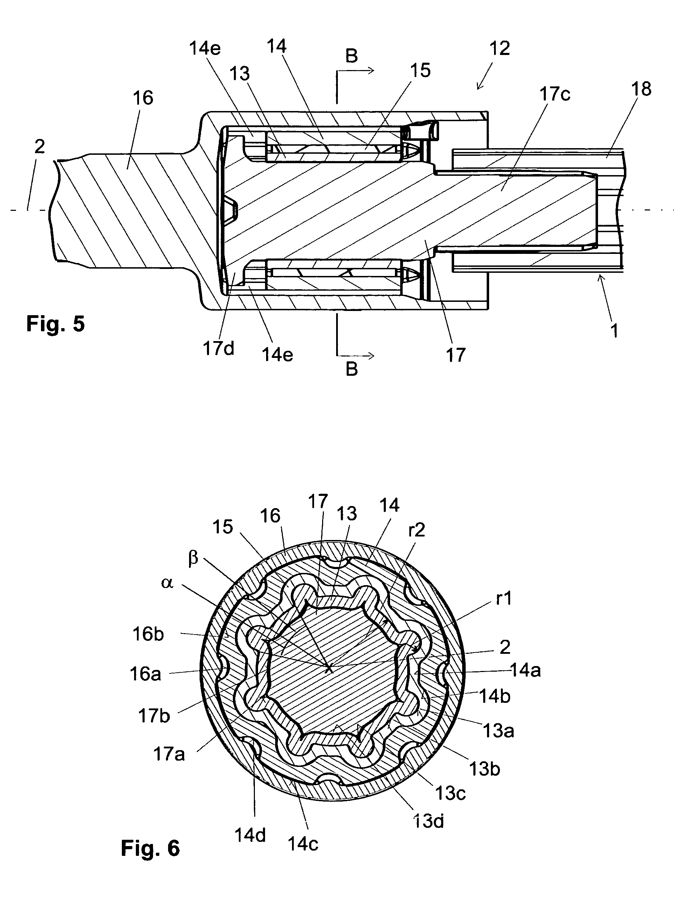

In den hinteren Lenkwellen-Abschnitt ist eine Dämpfungseinrichtung 12 integriert. Die Dämpfungseinrichtung 12 umfasst ein inneres Dämpferteil 13, das im Querschnitt gesehen (vgl. Fig. 6) eine von der Kreisform abweichende äußere Umfangskontur besitzt, und ein äußeres Dämpferteil 14, das im Querschnitt gesehen eine von der Kreisform abweichende innere Umfangskontur besitzt. Das äußere Dämpferteil 14 umgibt das innere Dämpferteil 13 ringförmig, d.h. das äußere Dämpferteil 14 ist hülsenförmig ausgebildet. Das innere und das äußere Dämpferteil 13, 14 liegen koaxial zueinander und koaxial zum hinteren Lenkwellen-Abschnitt 1, d.h. das innere und das äußere Dämpferteil 13, 14 sind um die Längsmittelachse 2 des hinteren Lenkwellen-Abschnitts drehbar.

Im radialen Zwischenraum zwischen dem inneren und dem äußeren Dämpferteil 13, 14 ist ein elastomeres Dämpfungsmaterial 15 angeordnet, welches eine Hülsenform ausbildet und im Querschnitt gesehen von der Kreisform abweichende innere und äußere Umfangskonturen besitzt.

Das innere und das äußere Dämpferteil 13, 14 stehen über das elastomere Dämpfungsmaterial bezogen auf die Drehung um die Längsmittelachse 2 in formschlüssigem Eingriff. Das innere und das äußere Dämpferteil 13, 14 sind also im Bezug auf eine Drehung um die Längsmittelachse 2 drehfest miteinander verbunden (abgesehen von den durch das elastomere Dämpfungsmaterial bewirkten Elastizitäten). Das innere und das äußere Dämpferteil 13, 14 sind weiters jeweils mit einem Wellenteil des hinteren Lenkwellen-Abschnitts 1 in Bezug auf eine Drehung um die Längsmittelachse 2 in drehfester Verbindung.

Wenn in dieser Schrift von einem Querschnitt durch die Dämpfungseinrichtung 12 oder durch ein Teil der Dämpfungseinrichtung 12 oder von einem Querschnitt durch den hinteren Lenkwellen-Abschnitt 1 oder ein Teil des hinteren Lenkwellen-Abschnitts 1 die Rede ist, so ist hierbei immer ein rechtwinkelig zur Längsmittelachse 2 des hinteren Lenkwellen-Abschnitts 1 bzw. der Dämpfungseinrichtung 12 stehender Querschnitt gemeint (entsprechend Fig. 6).

Im Querschnitt durch die Dämpfungseinrichtung 12 gesehen weist die innere Umfangskontur des äußeren Dämpferteils 14 (diese entspricht dem Querschnitt durch die innere Oberfläche des äußeren Dämpferteils 14) mehrere radial nach innen (also in Richtung zur Längsmittelachse 2) vorspringende innere Erhebungen 14a auf, zwischen denen innere Vertiefungen 14b der inneren Umfangskontur des äußeren Dämpferteils 14 liegen. In die Umfangsrichtung (=Drehrichtung) um die Längsmittelachse 2 aufeinanderfolgende innere Erhebungen 14a sind jeweils durch eine dazwischenliegende innere Vertiefung 14b voneinander beabstandet. Der Übergang zwischen einer jeweiligen inneren Erhebung 14a und daran anschließenden inneren Vertiefung 14b kann dort angesetzt werden, wo die innere Umfangskontur des äußeren Dämpferteils 14 die radiale Stelle überquert, die dem Mittelwert zwischen dem radial am weitesten innenliegenden Punkt der inneren Erhebung 14a und dem radial am weitesten außenliegenden Punkt der inneren Vertiefung 14b entspricht.

Im Querschnitt durch die Dämpfungseinrichtung 12 gesehen weist die äußere Umfangskontur des inneren Dämpferteils 13 (diese entspricht dem Querschnitt durch die äußere Oberfläche des inneren Dämpferteils 13) mehrere radial nach außen (also in die von der Längsmittelachse 2 weggerichtete Richtung) vorspringende äußere Erhebungen 13a auf, zwischen denen äußere Vertiefungen 13b der äußeren Umfangskontur des inneren Dämpferteils 13 liegen. In die Umfangsrichtung (=Drehrichtung) um die Längsmittelachse 2 aufeinanderfolgende äußere Erhebungen 13a sind jeweils durch eine dazwischenliegende äußere Vertiefung 13b voneinander beabstandet. Der Übergang zwischen einer jeweiligen äußeren Erhebung 13a und der daran anschließenden äußeren Vertiefung 13b kann dort angesetzt werden, wo die äußere Umfangskontur des inneren Dämpferteils 13 die radiale Stelle überquert, die dem Mittelwert zwischen dem radial am weitesten außen liegenden Punkt der äußeren Erhebung 13a und dem radial am weitesten innen liegenden Punkt der äußeren Vertiefung 13b entspricht.

Die äußeren Erhebungen 13a der äußeren Umfangskontur des inneren Dämpferteils 13 ragen in die inneren Vertiefungen 14b der inneren Umfangskontur des äußeren Dämpferteils 14, d.h. es besteht ein radialer Überlapp.

Im radialen Zwischenraum zwischen dem inneren Dämpferteil 13 und dem äußeren Dämpferteil 14 ist ein elastomeres Dämpfungsmaterial 15 angeordnet, vorzugsweise wird dieser Zwischenraum vollständig vom elastomeren Dämpfungsmaterial 15 ausgefüllt. Beim elastomeren Dämpfungsmaterial 15 kann es sich insbesondere um ein Gummielastomer handeln. Auch andere elastomere Materialien, beispielsweise auch thermoplastische Elastomere könnten vorgesehen sein.

Das elastomere Dämpfungsmaterial 15 greift in die inneren Vertiefungen 14b des äußeren Dämpferteils 14 und in die äußeren Vertiefungen 13b des inneren Dämpferteils 13 ein und ist damit bezogen auf die Drehrichtung um die Längsmittelachse 2 formschlüssig sowohl mit dem äußeren Dämpferteil 14 als auch mit dem inneren Dämpferteil 13 verbunden.

Das Dämpfungsmaterial 15 ist vorzugsweise sowohl mit der inneren Oberfläche des äußeren Dämpferteils 14 als auch mit der äußeren Oberfläche des inneren Dämpferteils 13 stoffschlüssig verbunden. Auch eine adhäsive Verbindung ist denkbar und möglich. Beispielsweise kann es an beiden Dämpferteilen 13, 14 anvulkanisiert sein. Auch eine Verklebung mit beiden Dämpferteilen 13, 14 oder ein Anvulkanisieren an eines der Dämpferteile 13, 14 und eine Verklebung mit dem anderen Dämpferteil 13, 14 ist beispielsweise möglich.

Im Querschnitt durch die Dämpfungseinrichtung gesehen weist die äußere Umfangskontur des inneren Dämpferteils 13 gekrümmte erste Abschnitte auf, welche die äußeren Erhebungen 13a bilden und welche einen ersten Krümmungsradius r1 besitzen oder in einen ersten Krümmungsradius r1 einbeschrieben sind. Im letzteren Fall ist der Radius des kleinsten Kreises gemeint, der um die jeweilige Erhebung 13a gelegt werden kann. Zwischen diesen ersten Abschnitten liegen zweite Abschnitte der äußeren Umfangskontur des inneren Dämpferteils 13, welche somit in den Bereichen der äußeren Vertiefungen 13b liegen. Diese zweiten Abschnitte besitzen einen zweiten Krümmungsradius r2, der größer als der erste Krümmungsradius r1 ist, vorzugsweise mehr als doppelt so groß, besonders bevorzugt mehr als dreimal so groß. Günstigerweise verlaufen die zweiten Abschnitte kreisbogenförmig um die Längsmittelachse 2 gekrümmt, wobei der zweite Krümmungsradius r2 also dem Radius eines um die Längsmittelachse 2 verlaufenden Kreises entspricht, auf dem die Böden der äußeren Vertiefungen 13d, zumindest abschnittsweise liegen. Es ist dies der kleinste Umschreibungskreis, auf dem zumindest ein Punkt der äußeren Umfangskontur des inneren Dämpferteils 13 liegt. Der zweite Krümmungsradius r2 könnte gegenüber dem Radius eines solchen kleinsten Umschreibungskreises beispielsweise auch um bis zu 30% größer oder kleiner sein.

Die Böden der äußeren Vertiefungen 13b weisen im gezeigten Ausführungsbeispiel also eine nach außen hin konvex gekrümmte Form auf. Auch ein geradliniger Verlauf oder eine von außen gesehen konkav gekrümmte Form der Böden der Vertiefungen 13b bzw. der genannten zweiten Abschnitte ist in einer modifizierten Ausführungsform denkbar und möglich.

Wenn man einen kleinsten Umschreibungskreis des inneren Dämpferteils 13 wie erwähnt als jenen Kreis definiert, der durch die radial am weitesten innen liegenden Punkte der äußeren Vertiefungen 13b verläuft, und einen größten Umschreibungskreis als einen Kreis definiert, der durch die radial am weitesten außen liegenden Punkte der äußeren Erhebungen 13a verläuft, so ist der Radius des größten Umschreibungskreises vorzugsweise um 10% bis 30% größer als der Radius des kleinsten Umschreibungskreises.

Die innere Umfangskontur des äußeren Dämpferteils 14 weist im Bereich der inneren Vertiefungen 14b vorzugsweise eine kreisbogenförmige Krümmung auf, die konzentrisch zur kreisbogenförmigen Krümmung eines jeweiligen der genannten ersten Abschnitte der äußeren Umfangskontur des inneren Dämpferteils 13 ist. Hierbei ist der Radius dieser kreisbogenförmigen Krümmung der inneren Umfangskontur im Bereich der inneren Vertiefung 14b um die Wandstärke des elastomeren Dämpfungsmaterials 15 größer als der Krümmungsradius r1.

Im Ausführungsbeispiel wird das innere Dämpferteil 13 von einer Hülse gebildet. Der erste Krümmungsradius r1 beträgt dann vorzugsweise das 0,8-1,2fache des Wertes der im Bereich einer der äußeren Vertiefung 13b gemessenen Wandstärke dieser Hülse. Die äußeren Erhebungen 13a werden damit von zumindest weitgehend, günstigerweise zumindest teilweise vollständig, zusammengefalteten Abschnitten der Hülsenwand gebildet. Auf diese Weise kann eine stabile Ausbildung erreicht werden.

Der Winkelbereich α, über den sich eine jeweilige äußere Erhebung 13a in Umfangsrichtung (=Drehrichtung) um die Längsmittelachse 2 erstreckt, ist kleiner als der jeweilige Winkelbereich β, über den sich eine jeweilige äußere Vertiefung 13b in Umfangsrichtung um die Längsmittelachse 2 erstreckt.

Vorzugsweise ist der Winkelbereich β um 25% bis 50% größer, besonders bevorzugt um 30% bis 45% größer, als der Winkelbereich α.

Die an der äußeren Oberfläche des inneren Dämpferteils 13 ausgebildeten äußeren Erhebungen 13a und äußeren Vertiefungen 13b und die an der inneren Oberfläche des äußeren Dämpferteils 14 ausgebildeten inneren Erhebungen 14a und inneren Vertiefungen 14b verlaufen in axialer Richtung, also parallel zur Längsmittelachse 2.

Vorteilhafterweise sind um den Umfang des inneren Dämpferteils 13 mindestens vier äußere Erhebungen 13a und mindestens vier äußere Vertiefungen 13b vorhanden, wobei ein Wert von jeweils acht besonders bevorzugt ist. Das äußere Dämpferteil 14 weist eine entsprechende Anzahl von inneren Erhebungen 14a und inneren Vertiefungen 14b auf.

Das äußere Dämpferteil 13 ist drehfest mit einem ersten Wellenteil 16 des hinteren Lenkwellen-Abschnitts 1 verbunden. Dieses steht von der Dämpfungseinrichtung 12 in axialer Richtung des hinteren Lenkwellen-Abschnitts 1 ab, führt also von der Dämpfungseinrichtung 12 in eine Richtung entlang der Längsmittelachse 2 fort. Zur drehfesten Verbindung besitzt das äußere Dämpferteil 14 eine im Querschnitt durch die Dämpfungseinrichtung 12 gesehen von der Kreisform abweichende äußere Umfangskontur, welche von äußeren Erhebungen 14c und dazwischenliegenden äußeren Vertiefungen 14d gebildet wird, und das erste Wellenteil 16 besitzt einen hülsenförmigen Abschnitt mit einer im Querschnitt gesehen von der Kreisform abweichenden inneren Umfangskontur, welche von inneren Erhebungen 16a und dazwischenliegenden inneren Vertiefungen 16b gebildet wird. Durch die mit den äußeren Vertiefungen 14d in Eingriff stehenden inneren Erhebungen 16a und die mit den äußeren Erhebungen 14c in Eingriff stehenden inneren Vertiefungen 16b wird zwischen dem äußeren Dämpferteil 14 und dem ersten Wellenteil 16 ein Formschluss in Bezug auf die Drehrichtung um die Längsmittelachse 2 ausgebildet.

Die äußeren Vertiefungen 14d liegen jeweils im Winkelbereich (bezogen auf die Umfangsrichtung um die Längsmittelachse 2) einer der inneren Erhebungen 14a und die äußeren Erhebungen 14c umfassen jeweils den Winkelbereich (bezogen auf die Umfangsrichtung um die Längsmittelachse 2) einer der inneren Vertiefungen 14b.

Im Ausführungsbeispiel ist zwischen einer inneren Erhebung 16a des erste Wellenteils 16 und der äußeren Vertiefung 14d des äußeren Dämpferteils 14 ein radialer Spalt vorhanden.

Die Oberseiten der äußeren Erhebungen 14c und die Böden der inneren Vertiefungen 16b verlaufen zylindermantelförmig gekrümmt um die Längsmittelachse 2. In diesen Bereichen ist das Wellenteil 16 auf das äußere Dämpferteil 14 aufgepresst, sodass ein Presssitz ausgebildet ist.

Im Ausführungsbeispiel schließt an den hülsenförmigen Abschnitt des ersten Wellenteils 16, in welchem dieses das äußere Dämpferteil 14 umgibt, ein massiver Abschnitt des ersten Wellenteils 16 an. Denkbar und möglich wäre es auch, das erste Wellenteil 16 insgesamt hülsenförmig auszubilden.

Das im Ausführungsbeispiel hülsenförmig ausgebildete innere Dämpferteil 13 ist drehfest mit einem zweiten Wellenteil 17 verbunden. Hierzu weist das innere Dämpferteil 13 eine im Querschnitt gesehen von der Kreisform abweichende innere Umfangskontur auf. Diese wird von inneren Vertiefungen 13c gebildet, zwischen denen innere Erhebungen 13d liegen. Die inneren Vertiefungen 13c liegen jeweils im Winkelbereich (bezogen auf die Umfangsrichtung um die Längsmittelachse 2) einer der äußeren Erhebungen 13a und die inneren Erhebungen 13d umfassen jeweils den Winkelbereich (bezogen auf die Umfangsrichtung um die Längsmittelachse 2) einer der äußeren Vertiefungen 13b. Das zweite Wellenteil weist im Querschnitt durch die Dämpfungseinrichtung 12 gesehen eine von der Kreisform abweichende äußere Umfangskontur auf, welche von äußeren Erhebungen 17a gebildet werden, zwischen denen äußere Vertiefungen 17b liegen. Die äußeren Erhebungen 17a des zweiten Wellenteils stehen im Eingriff mit den inneren Vertiefungen 13c des inneren Dämpferteils 13 und die äußeren Vertiefungen 17b des zweiten Wellenteils stehen in Eingriff mit den inneren Erhebungen 13d des inneren Dämpferteils 13, wobei durch diese Eingriffe jeweils ein Formschluss bezogen auf die Drehrichtung um die Längsmittelachse 2 ausgebildet wird.

Die Böden der äußeren Vertiefungen 17b des zweiten Wellenteils 17 und den Oberseiten der inneren Erhebungen 13d des inneren Dämpferteils 13 verlaufen zylindermantelförmig gekrümmt um die Längsmittelachse 2. In diesen Bereichen ist das innere Dämpferteil 13 auf das zweite Wellenteil 17 aufgepresst, sodass ein Presssitz ausgebildet wird.

Das zweite Wellenteil 17 steht von der Dämpfungseinrichtung 12 in axialer Richtung des hinteren Lenkwellen-Abschnitts 1 ab, und zwar in die entgegengesetzte Richtung wie das erste Wellenteil 16. Der von der Dämpfungseinrichtung 12 abstehende Teil des zweiten Wellenteils 17 bildet hierbei einen Verbindungszapfen 17c, über welchen das zweite Wellenteil drehfest mit einem dritten Wellenteil 18 verbunden ist, welches vom zweiten Wellenteil in axialer Richtung des hinteren Lenkwellen-Abschnitts absteht (in die von der Dämpfungseinrichtung 12 abgelegene Richtung).

Das zweite Wellenteil 17 steht auch auf der Seite, auf der das erste Wellenteil 16 von der Dämpfungseinrichtung 12 wegführt über das innere und das äußere Dämpferteil 13, 14 axial vor. In diesem Bereich besitzt das zweite Wellenteil einen radial nach außen abstehenden Bund 17d. Dadurch wird eine axiale Auszugsicherung des zweiten Wellenteils 17 aus dem inneren Dämpferteil 13 gebildet. Der Bund 17d kann z.B. als Ringbund ausgebildet sein. Denkbar und möglich ist es, den Bund 17d mit einer von einer Kreisform abweichenden äußeren Umfangskontur mit Anlageflächen zu versehen, die bei sehr großen Verdrehmomenten zwischen dem ersten Wellenteil 16 und dem zweiten Wellenteil 17, oder dem dritten Wellenteil 18, mit Anlageabschnitten 14e, des äußeren Dämpferteils 14 oder direkt, wie hier nicht dargestellt, mit Anlageabschnitten des ersten Wellenteils 16 in Kontakt gebracht ist. Auf diese Weise kann eine Überbeanspruchung des Dämpfungsmaterials 15 vermieden werden.

Das zweite Wellenteil 17 kann im Sinterverfahren oder in einem Schmiedeverfahren einfach hergestellt werden. Je nach Ausführungsform ist auch eine Darstellung des zweiten Wellenteils im Strangpressverfahren denkbar und möglich.

Die Dämpfungseinrichtung 12 liegt also im Bereich der Längserstreckung des hinteren Lenkwellen-Abschnitts 1 und koaxial mit diesem. Beidseitig der Dämpfungseinrichtung 12, bezogen auf die axiale Richtung des hinteren Lenkwellen-Abschnitts 1, liegen Teile des hinteren Lenkwellen-Abschnitts 1.

Der hintere Lenkwellen-Abschnitt 1 ist über zumindest ein hinteres Drehlager 19 drehbar gelagert, welches im axialen Bereich zwischen der Dämpfungseinrichtung 12 und dem hinteren Ende 3 des hinteren Lenkwellen-Abschnitts 1 liegt. Weiters ist der hintere Lenkwellen-Abschnitt 1 über ein vorderes Drehlager 20 drehbar gelagert, welches im axialen Bereich zwischen der Dämpfungseinrichtung 12 und dem Kardangelenk 6 liegt.

Die in diesem Ausführungsbeispiel gezeigte Lenksäule ist in die Verstellrichtungen 21 und 22 verstellbar. Die Verstellrichtung 21 liegt parallel zur Längsmittelachse 2 und ermöglicht eine Längenverstellung. Hierzu umfasst der hintere Lenkwellen-Abschnitt zwei gegeneinander teleskopierbare Teilstücke. Eines dieser beiden gegeneinander teleskopierbaren Teilstücke wird vom zuvor beschriebenen dritten Wellenteil 18 gebildet. Das andere dieser teleskopierbaren Teilstücke wird von einem vierten Wellenteil 23 gebildet, welches sich bis zum hinteren Ende 3 des hinteren Lenkwellen-Abschnitts 1 erstreckt und über das hintere Drehlager 19 gegenüber einer Manteleinheit 24 der Lenksäule drehbar gelagert ist. Die Manteleinheit 4 ist im geöffneten Zustand einer Feststellvorrichtung 25 gegenüber einer Schwenkeinheit 26 in die Verstellrichtung 21 verstellbar. Im geschlossenen Zustand der Feststellvorrichtung ist die Manteleinheit 24 mit der Schwenkeinheit 26 verklemmt. Zur Verstellung der Lenksäule in die Verstellrichtung 22, welche eine Höhen- bzw. Neigungsverstellung der Lenksäule darstellt, ist die Schwenkeinheit 26 im geöffneten Zustand der Feststellvorrichtung 25 gegenüber einer Montageeinheit 27 um eine Schwenkachse 28, die horizontal und rechtwinkelig zur Längsmittelachse 2 liegt, verschwenkbar. Im geschlossenen Zustand der Feststellvorrichtung 25 ist die Schwenkeinheit 26 zwischen Seitenschenkeln 27a, 27b der Montageeinheit verklemmt.

Die Montageeinheit 27 wird am Fahrzeugchassis montiert.

Die Fixierung der eingestellten Position im geschlossenen Zustand der Feststellvorrichtung 25 kann durch reibschlüssig und/oder formschlüssig zusammenwirkende Elemente erfolgen, wie dies bekannt ist. Zum Öffnen und Schließen der Feststellvorrichtung ist ein Betätigungshebel 25a dargestellt. Stattdessen könnte auch mindestens ein elektrisch betriebenes Antriebsmittel vorgesehen sein.

Der hintere Lenkwellen-Abschnitt 1, insbesondere das erste Wellenteil 16, ist vom vorderen Drehlager 20 gegenüber der Schwenkeinheit 26 drehbar gelagert.

Die Dämpfungseinrichtung 12 liegt im Ausführungsbeispiel im Bereich des vorderen Endes der den hinteren Lenkwellen-Abschnitt 1 lagernden und tragenden Teile der Lenksäule.

Die Dämpfungseinrichtung 12 ist in Bezug auf axiale Auslenkungen zwischen dem inneren und dem äußeren Dämpferteil 13, 14 viel weicher als in Bezug auf Auslenkungen in die Drehrichtung um die Längsmittelachse 2, vorzugsweise mehr als dreimal elastischer in die axiale Richtung als in die Drehrichtung. Durch den Eingriff der äußeren Erhebungen 13a des inneren Dämpferteils 13 in die inneren Vertiefungen 14b des äußeren Dämpferteils 14 wird das in diesen Bereichen dazwischenliegende elastomere Dämpfungsmaterial 15 bei einer Belastung in Drehrichtung zumindest im Wesentlichen komprimiert (=die einwirkende Kraft liegt zumindest im Wesentlichen parallel zur Oberflächennormalen auf das Dämpfungsmaterial 15), wird also zumindest im Wesentlichen nicht auf Scherung belastet und. Die Elastizität für eine Komprimierung ist aber wesentlich geringer als bei einer Scherbelastung. Bei einer axialen Auslenkung zwischen dem inneren und dem äußeren Dämpferteil 13, 14 kommt es dagegen zumindest im Wesentlichen zu einer Scherbelastung des Dämpfungsmaterials 15.

Im Ausführungsbeispiel ist das innere Dämpferteil 13 antriebsseitig angeordnet und wird vom antriebsseitig mit der Dämpfungseinrichtung verbundenen Wellenteil 17 angetrieben. Das äußere Dämpferteil 14 ist abtriebsseitig angeordnet und treibt das mit ihm verbundene Wellenteil 16 an. Auch eine antriebsseitige Anordnung des äußeren Dämpferteils 14 und eine abtriebsseitige Anordnung des inneren Dämpferteils 13 ist möglich.

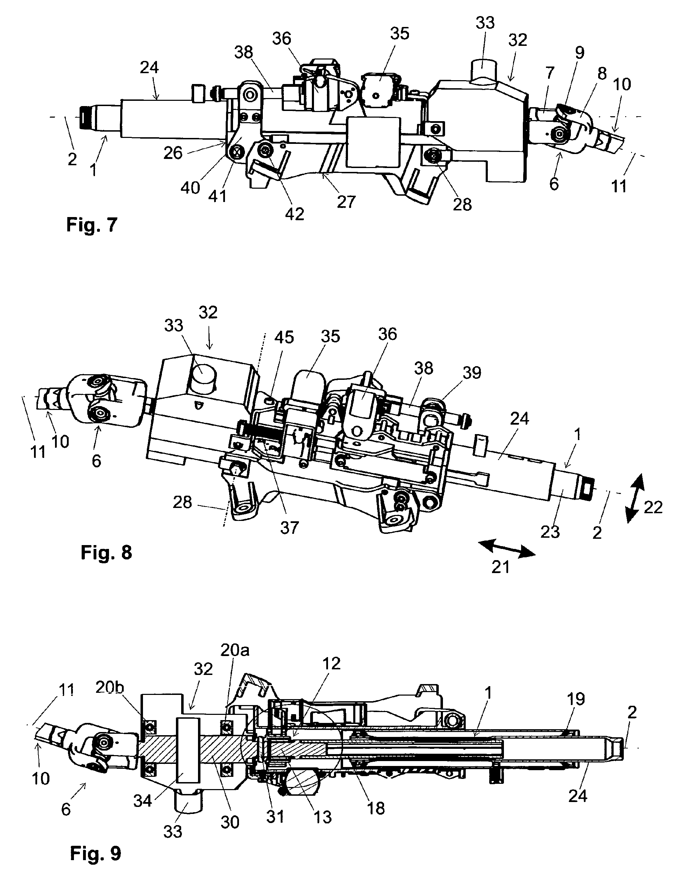

Ein zweites Ausführungsbeispiel der Erfindung ist in den Fig. 7 bis 13 dargestellt. Dieses entspricht dem zuvor beschriebenen Ausführungsbeispiel abgesehen von den im Folgenden erläuterten Unterschieden. Analoge Teile sind mit den gleichen Bezugszeichen versehen.

In diesem Ausführungsbeispiel ist das innere Dämpferteil 13 einstückig mit einem axial von der Dämpfungseinrichtung 12 abstehenden Verbindungszapfen 29 ausgebildet, der drehfest mit dem dritten Wellenteil 18 verbunden ist. Dieses das innere Dämpferteil 13 und den Verbindungszapfen 29 umfassende Bauteil wirkt also über einen Abschnitt seiner axialen Erstreckung über das Dämpfungsmaterial 15 mit dem äußeren Dämpferteil 14 zusammen und bildet in diesem axialen Abschnitt seiner Erstreckung das innere Dämpferteil 13. Dieses innere Dämpferteil 13 ist hier massiv ausgebildet. Eine hülsenförmige Ausbildung des inneren Dämpferteils 13 und/oder des Verbindungszapfens 29 wäre aber ebenfalls möglich. Die äußere Oberfläche des inneren Dämpferteils 13 bzw. im Querschnitt gesehen die äußere Umfangskontur des inneren Dämpferteils 13 entspricht von der Form her der entsprechenden Beschreibung des inneren Dämpferteils 13 des ersten Ausführungsbeispiels.

Das zweite Wellenteil 17 des ersten Ausführungsbeispiels entfällt somit in diesem zweiten Ausführungsbeispiel.

Das erste Wellenteil 16 entspricht in demjenigen axialen Bereich, in welchem es mit dem äußeren Dämpferteil 14 in Eingriff steht, dem ersten Wellenteil 16 des ersten Ausführungsbeispiels. In diesem Ausführungsbeispiel ist das erste Wellenteil 16 aber insgesamt hülsenförmig ausgebildet und mit einem weiteren Wellenteil 30 durch eine Verstiftung mit einem Verbindungsstift 31 verbunden.

Im Übrigen ist die Dämpfungseinrichtung 12 gleich wie im zuvor beschriebenen ersten Ausführungsbeispiel ausgebildet.

Die Lenksäule umfasst hier eine elektrische Hilfskrafteinrichtung 32, die nur stark schematisiert dargestellt ist. Das Wellenteil 30 ist Teil dieser elektrischen Hilfskrafteinrichtung 32. Die elektrische Hilfskrafteinrichtung 32 weist einen Elektromotor 33 und Getriebeglieder 34 auf, über welche der Elektromotor 33 mit dem hinteren Lenkwellen-Abschnitt 1 in Verbindung steht. Beispielsweise kann von der elektrischen Hilfskrafteinrichtung eine Hilfskraft in die Lenkwelle eingeleitet werden, von der eine Lenkbewegung des Fahrers unterstützt wird. Auch kann vom Elektromotor 33 eine Hilfskraft ausgeübt werden, um beispielsweise eine Übersetzung des vom Fahrer eingestellten Lenkwinkels oder um eine vom Fahrer unabhängige Lenkbewegung durchzuführen.

Solche elektrischen Hilfskrafteinrichtungen sind in unterschiedlichen Ausführungsformen bekannt.

Die elektrische Hilfskrafteinrichtung 32 ist im hinteren Lenkwellen-Abschnitt zwischen der Dämpfungseinrichtung 12 und dem Kardangelenk 6 angeordnet.

Im Bereich der elektrischen Hilfskrafteinrichtung 32 sind vordere Drehlager 20a, 20b angeordnet, von denen eine Lagerung des hinteren Lenkwellen-Abschnitts 1 erfolgt, hier im Bereich des Wellenteils 30.

Die Lenksäule gemäß dieser zweiten Ausführungsform der Erfindung ist wiederum in die Verstellrichtungen 21, 22 verstellbar, wobei hier die Verstellung durch elektrische Antriebsmittel 35, 36 erfolgt. Das elektrische Antriebsmittel 35 ist ein Elektromotor, von dem eine Spindelmutter gedreht wird, die auf einer Gewindespindel 37 angeordnet ist. Durch Verdrehung der Gewindemutter erfolgt eine Längenverstellung in die Verstellrichtung 21, bei welcher die das vierte Wellenteil 23 drehbar lagernde Manteleinheit 24 gegenüber der Schwenkeinheit 26 in die Verstellrichtung 21 verschoben wird. Hierzu ist das elektrische Antriebsmittel 35 mit der Manteleinheit 24 und die Gewindespindel 37 mit der Schwenkeinheit 26 bezogen auf die Verstellrichtung 21 unverschiebbar verbunden.

Die Schwenkeinheit 26 ist um die Schwenkachse 28 gegenüber der am Fahrzeugchassis befestigbaren Montageeinheit 27 verschwenkbar gelagert. Zur Verstellung in die Verstellrichtung 22 dient das elektrische Antriebsmittel 36. Dieses ist in Form eines Elektromotors ausgebildet, der die Gewindespindel 38 um ihre Achse dreht. Auf der Gewindespindel 38 ist eine Spindelmutter 39 angeordnet, die mit dem Stellhebel 40 gelenkig verbunden ist. Der Stellhebel 40 ist an der Schwenkeinheit 26 um die Schwenkachse 41 und an der Montageeinheit 27 um die Schwenkachse 42 verschwenkbar gelagert, wobei die Schwenkachsen 41, 42 parallel zur Schwenkachse 28 liegen. Bei der Verschwenkung des Stellhebels 40 um die Schwenkachse 42 wird die Schwenkeinheit 26 um die Schwenkachse 28 verschwenkt. Die Schwenkachse 28 kann sich hierbei gegenüber der Montageeinheit 27 in die Richtung der Längsmittelachse 2 etwas verschieben (durch die Anordnung eines diese Schwenkachse bildenden Bolzens in Langlöchern der Montageeinheit 27).

Die Verstellung in die Verstellrichtungen 21, 22 könnte in einer Modifikation der zweiten Ausführungsform auch manuell erfolgen, analog wie im ersten Ausführungsbeispiel beschrieben.

Auf dem ersten Wellenteil 16 ist in diesem zweiten Ausführungsbeispiel ein Raststern 43 angeordnet.

Der Raststern 43 liegt im Bereich der (auf die Längsmittelachse 2 bezogenen) axialen Erstreckung des elastischen Dämpfungsmaterials 15. Mit anderen Worten ist der Raststern 43 in einem axialen Bereich des hinteren Lenkwellen-Abschnitts (1) angeordnet, in welchem auch das elastische Dämpfungsmaterial 15 liegt.

Durch den Raststern 43 und ein mit diesem in Eingriff bringbares Rastelement kann eine Wegfahrsperre realisiert werden. Durch eine entsprechende Auslegung des Pressverbandes zwischen dem Raststern 43 und dem ersten Wellenteil 16 kann in einfacher Weise eine gewünschte Verdrehfestigkeit für den Raststern 43, beispielsweise von 200Nm, realisiert werden, bei deren Überschreiten ein Durchrutschen des Raststerns 43 gegenüber dem ersten Wellenteil 16 ermöglicht wird.

Der Raststern 43 kann in der zweiten Ausführungsform auch entfallen bzw. es könnte in der ersten Ausführungsform auch ein solcher Raststern vorgesehen sein.

Durch eine lösbare Verbindung des Verbindungszapfens 29 mit dem dritten Wellenteil 18 und eine lösbare Ausbildung der Verstiftung mit dem Verbindungsstift 31 kann eine einfache Demontagemöglichkeit der Dämpfungseinrichtung 12 vorgesehen sein. Die Hilfskrafteinrichtung 32 kann ebenfalls über mindestens eine Verschraubung 45 mit der Schwenkeinheit 26 verbunden sein, sodass Wartungsarbeiten unter Auftrennung der Lenkwelle einfach ermöglicht werden. Die Verschraubungen können entweder über spezielle Zwischenstücke und/oder über Gummizwischenlagen (nicht dargestellt) akustisch entkoppelt werden.

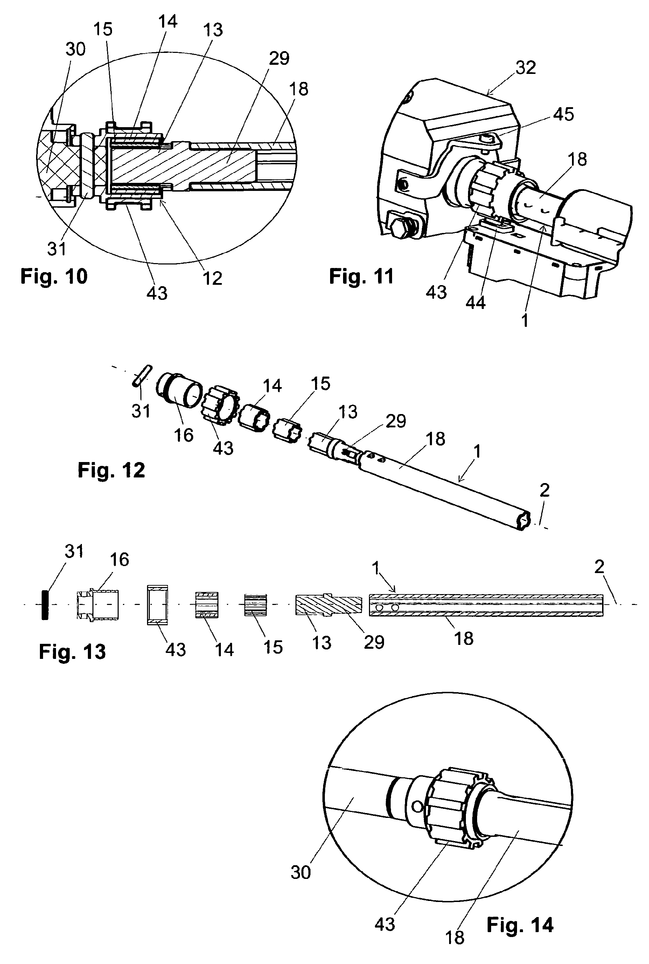

Fig. 14 zeigt eine geringfügige Modifikation der zweiten Ausbildungsform ohne eine Hilfskrafteinrichtung.

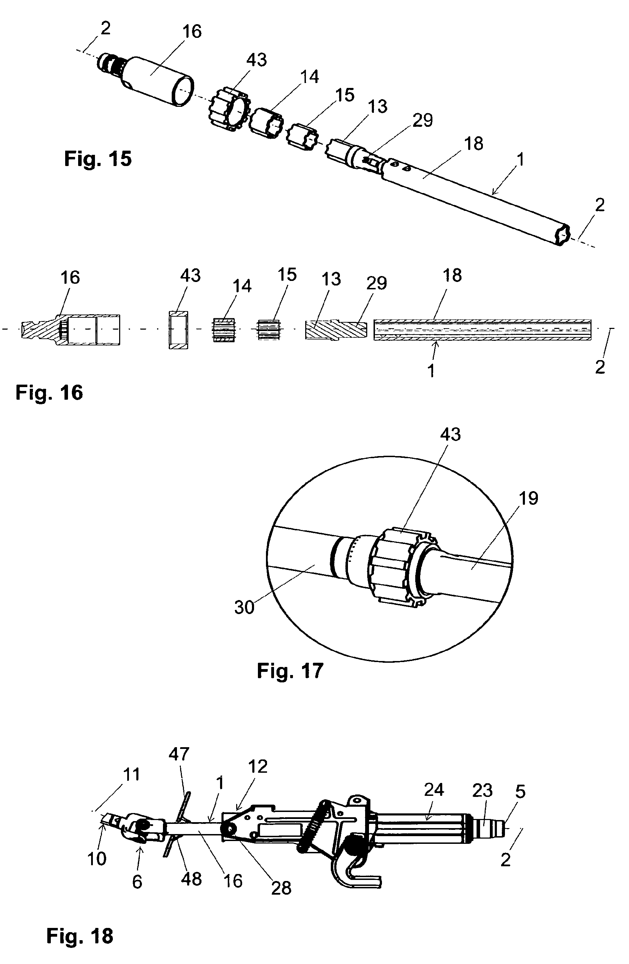

Fig. 15 zeigt eine Darstellung entsprechend den Fig. 12 und 13, wobei die Ausbildung dahingehend modifiziert ist, dass das erste Wellenteil 16 statt durch eine Verstiftung durch einen eingepressten Verbindungszapfen 46 mit einem weiteren Teil des hinteren Lenkwellen-Abschnitts 1 oder mit der hinteren Gelenkgabel 7 des Kardangelenks 6 durch eine Pressverbindung verbunden ist. Fig. 17 zeigt die Modifikation gegenüber Fig. 14 dahingehend, dass anstelle der Verstiftung eine solche Pressverbindung mit einem weiteren Wellenteil vorhanden ist.

Fig. 18 zeigt eine Modifikation der ersten Ausführungsform, wobei das erste Wellenteil 16 gegenüber dem ersten Ausführungsbeispiel verlängert ausgebildet ist und durch eine Spritzwand (="dash board") durchgeführt ist, welche den Fahrgastraum vom Motorraum abtrennt. Im Bereich dieser Durchführung ist eine Abdichtung des ersten Wellenteils 16 gegenüber der Spritzwand 47 ausgebildet. Es ist zu diesem Zweck eine Dichtmanschette 48 dargestellt, die auch als Lagerung für den hinteren Lenkwellen-Abschnitt 1 ausgebildet sein kann.

Eine erfindungsgemäße Lenksäule könnte auch nur in die Verstellrichtung 21 oder nur in die Verstellrichtung 22 verstellbar ausgebildet sein oder unverstellbar sein.

Soweit anwendbar sind alle in den einzelnen Ausführungsformen gezeigten Merkmale untereinander frei kombinierbar ohne den Bereich der Erfindung zu verlassen.

**Legende zu den Hinweisziffern:**

| | | | |
|---|---|---|---|
| 1 | hinterer Lenkwellen-Abschnitt | 17a | äußere Erhebung |
| 2 | Längsmittelachse | 17b | äußere Vertiefung |
| 3 | hinteres Ende | 17c | Verbindungszapfen |
| 4 | Lenkrad | 17d | Bund |
| 5 | vorderes Ende | 18 | drittes Wellenteil |
| 6 | Kardangelenk | 19 | hinteres Drehlager |
| 7 | hintere Gelenkgabel | 20 | vorderes Drehlager |
| 8 | vordere Gelenkgabel | 20a | vorderes Drehlager |
| 9 | Zapfenkreuz | 20b | vorderes Drehlager |
| 10 | weiterer Lenkwellen-Abschnitt | 21 | Verstellrichtung |
| 11 | Längsmittelachse | 22 | Verstellrichtung |
| 12 | Dämpfungseinrichtung | 23 | viertes Wellenteil |
| 13 | inneres Dämpferteil | 24 | Montageeinheit |
| 13a | äußere Erhebung | 25 | Feststellvorrichtung |
| 13b | äußere Vertiefung | 25a | Betätigungshebel |
| 13c | innere Vertiefung | 26 | Schwenkeinheit |
| 13d | innere Erhebung | 27 | Montageeinheit |
| 14 | äußeres Dämpferteil | 27a | Seitenschenkel |
| 14a | innere Erhebung | 27b | Seitenschenkel |
| 14b | innere Vertiefung | 28 | Schwenkachse |
| 14c | äußere Erhebung | 29 | Verbindungszapfen |
| 14d | äußere Vertiefung | 30 | Wellenteil |
| 14e | Anlageabschnitt | 31 | Verbindungsstift |
| 15 | Dämpfungsmaterial | 32 | elektrische Hilfskrafteinrichtung |
| 16 | erstes Wellenteil | 33 | Elektromotor |
| 16a | innere Erhebung | 34 | Getriebeglied |
| 16b | innere Vertiefung | 35 | elektrisches Antriebsmittel |
| 17 | zweites Wellenteil | 36 | elektrisches Antriebsmittel |
| 37 | Gewindespindel | 43 | Raststern |
| 38 | Gewindespindel | 44 | Rastelement |
| 39 | Spindelmutter | 45 | Verschraubung |
| 40 | Stellhebel | 46 | Verbindungszapfen |
| 41 | Schwenkachse | 47 | Spritzwand |
| 42 | Schwenkachse | 48 | Dichtmanschette |

## Patentansprüche

1. Lenksäule für ein Kraftfahrzeug mit einer Lenkwelle, welche einen hinteren Lenkwellen-Abschnitt (1), der geradlinig verläuft und um eine Längsmittelachse (2) drehbar ist und an dem an einem hinteren Ende (3) ein Lenkrad (4) montierbar ist, und zumindest einen weiteren Lenkwellen-Abschnitt (10) umfasst, der mit dem hinteren Lenkwellen-Abschnitt (1) über ein Kardangelenk (6) verbunden ist, welches eine hintere Gelenkgabel (7), eine vordere Gelenkgabel (8) und ein die hintere Gelenkgabel (7) und die vordere Gelenkgabel (8) verbindendes Zapfenkreuz (9) umfasst, wobei zur Dämpfung von über die Lenkwelle übertragenen Vibrationen eine Dämpfungseinrichtung (12) vorhanden ist, die ein inneres Dämpferteil (13), welches eine im Querschnitt durch die Dämpfungseinrichtung (12) gesehen von der Kreisform abweichende äußere Umfangskontur aufweist, ein das innere Dämpferteil (13) umgebendes äußeres Dämpferteil (14), welches eine im Querschnitt durch die Dämpfungseinrichtung (12) gesehen von der Kreisform abweichende innere Umfangskontur aufweist, und ein zwischen dem inneren Dämpferteil (13) und dem äußeren Dämpferteil (14) angeordnetes elastomeres Dämpfungsmaterial (15) umfasst, **dadurch gekennzeichnet, dass** die Dämpfungseinrichtung (12) in den hinteren Lenkwellen-Abschnitt (1) integriert ist, wobei das innere und das äußere Dämpferteil (13, 14) um die Längsmittelachse (2) des hinteren Lenkwellen-Abschnitts drehbar sind, und dass das äußere Dämpferteil (14) eine im Querschnitt durch die Dämpfungseinrichtung (12) gesehen von der Kreisform abweichende äußere Umfangskontur aufweist, mit der es mit einer im Querschnitt durch die Dämpfungseinrichtung (12) gesehen von der Kreisform abweichenden inneren Umfangskontur eines hülsenförmigen Abschnitts eines ersten Welltenteils (16) des hinteren Lenkwellen-Abschnitts (1) in einem in Bezug auf die Drehrichtung um die Längsmittelachse (2) formschlüssigen Eingriff steht.

2. Lenksäule nach Anspruch 1, **dadurch gekennzeichnet, dass** auf dem ersten Wellenteil (16) ein Raststern (43) einer Wegfahrsperre angeordnet ist.

3. Lenksäule nach Anspruch 2, **dadurch gekennzeichnet, dass** der Raststern (43) in einem axialen Bereich des hinteren Lenkwellen-Abschnitts (1) liegt, in welchem sich auch das elastische Dämpfungsmedium (15) befindet.

4. Lenksäule nach Anspruch 1 bis 3, **dadurch gekennzeichnet, dass** die Dämpfungseinrichtung (12) bezogen auf die Richtung der Längsmittelachse (2) des hinteren Lenkwellen-Abschnitts (1) einen Abstand von der an den hinteren Lenkwellen-Abschnitt (1) angeschlossenen hinteren Gelenkgabel (7) des Kardangelenks (6) aufweist.

5. Lenksäule nach Anspruch 4, **dadurch gekennzeichnet, dass** der Abstand von der hinteren Gelenkgabel (7) mindestens dem Durchmesser des von der hinteren Gelenkgabel (7) fortführenden Wellenteils (16, 30) des hinteren Lenkwellen-Abschnitts (1) ist.

6. Lenksäule nach einem der Ansprüche 1 bis 5, **dadurch gekennzeichnet, dass** der hintere Lenkwellen-Abschnitt (1) über zumindest ein vorderes Drehlager (20) drehbar gelagert ist, welches zwischen der Dämpfungseinrichtung (12) und dem Kardangelenk (6) liegt.

7. Lenksäule nach einem der Ansprüche 1 bis 6, **dadurch gekennzeichnet, dass** der hintere Lenkwellen-Abschnitt (1) zumindest über ein hinteres Drehlager (19) drehbar gelagert ist, welches zwischen der Dämpfungseinrichtung (12) und dem hinteren Ende (3) des hinteren Lenkwellen-Abschnitts (1) liegt.

8. Lenksäule nach einem der Ansprüche 1 bis 7, **dadurch gekennzeichnet, dass** die Lenksäule eine elektrische Hilfskrafteinrichtung (32) aufweist, wobei die Dämpfungseinrichtung (12) zwischen dem hinteren Ende des hinteren Lenkwellen-Abschnitts (1) und der elektrischen Hilfskrafteinrichtung (32) angeordnet ist.

9. Lenksäule nach einem der Ansprüche 1 bis 8, **dadurch gekennzeichnet, dass** die Lenksäule zumindest in ihrer Länge verstellbar ist, wobei der hintere Lenkwellen-Abschnitt (1) zwei gegeneinander teleskopierbare Wellenteile (18, 23) umfasst.

10. Lenksäule nach einem der Ansprüche 1 bis 9, **dadurch gekennzeichnet, dass** im Querschnitt durch die Dämpfungseinrichtung (12) gesehen die innere Umfangskontur des äußeren Dämpferteils (14) mehrere in Umfangsrichtung um die Längsmittelachse (2) des hinteren Lenkwellen-Abschnitts voneinander beabstandete radial nach innen vorspringende innere Erhebungen (14a) aufweist, zwischen denen innere Vertiefungen (14b) der inneren Umfangskontur des äußeren Dämpferteils (14) liegen, und die äußere Umfangskontur des inneren Dämpferteils (13) mehrere in Umfangsrichtung um die Längsmittelachse (2) voneinander beabstandete radial nach außen vorspringende äußere Erhebungen (13a) aufweist, zwischen denen äußere Vertiefungen (13b) der äußeren Umfangskontur des inneren Dämpferteils (13) liegen, wobei die äußeren Erhebungen (13a) der äußeren Umfangskontur des inneren Dämpferteils (13) in die inneren Vertiefungen (14b) der inneren Umfangskontur des äußeren Dämpferteils (14) ragen.

11. Lenksäule nach Anspruch 10, **dadurch gekennzeichnet, dass** im Querschnitt durch die Dämpfungseinrichtung (12) gesehen die äußere Umfangskontur des inneren Dämpferteils (13) gekrümmte erste Abschnitte aufweist, welche die äußeren Erhebungen (13a) bilden, wobei die ersten Abschnitte einen ersten Krümmungsradius (r1) besitzen oder die von den ersten Abschnitten gebildeten äußeren Erhebungen (13a) in einem erstem Krümmungsradius (r1) einbeschrieben sind, und zweite Abschnitte aufweist, welche zwischen den ersten Abschnitten in den Bereichen der äußeren Vertiefungen (13b) liegen und welche einen zweiten Krümmungsradius (r2) besitzen, der größer als der erste Krümmungsradius (r1) ist, oder welche geradlinig verlaufen.

12. Lenksäule nach einem der Ansprüche 1 bis 11, **dadurch gekennzeichnet, dass** das erste Wellenteil (16) von der Dämpfungseinrichtung (12) in axialer Richtung des hinteren Lenkwellen-Abschnitts (1) absteht.

13. Lenksäule nach einem der Ansprüche 1 bis 12, **dadurch gekennzeichnet, dass** das innere Dämpferteil (13) eine im Querschnitt gesehen von der Kreisform abweichende innere Umfangskontur aufweist, mit der es mit einer im Querschnitt gesehen von der Kreisform abweichenden äußeren Umfangskontur eines Abschnitts eines zweiten Wellenteils (17) des hinteren Lenkwellen-Abschnitts (1) in einem im Bezug auf die Drehrichtung um die Längsmittelachse (2) formschlüssigen Eingriff steht, wobei das zweite Wellenteil (17) von der Dämpfungseinrichtung (12) in axialer Richtung des hinteren Lenkwellen-Abschnitts (1) absteht.

14. Lenksäule nach einem der Ansprüche 1 bis 13, **dadurch gekennzeichnet, dass** das zweite Wellenteil (17) mit einem dritten Wellenteil (18) drehfest verbunden ist, wobei das dritten Wellenteil (18) vom zweiten Wellenteil (17) in axialer Richtung des hinteren Lenkwellen-Abschnitts (1) absteht.

## Claims

1. Steering column for a motor vehicle, with a steering shaft comprising a rear steering shaft segment (1), which extends in a straight line and is rotatable about a longitudinal centre axis (2) and to which at a rear end (3) a steering wheel (4) is mountable, and at least one further steering shaft segment (10) which is connected with the rear steering shaft segment (1) via a universal joint (6) which comprises a rear joint fork (7), a front joint fork (8) and a joint cross (9) connecting the rear joint fork (7) and the front joint fork (8), wherein for damping vibrations transmitted via the steering shaft a damping device (12) is provided comprising an inner damper part (13) which, viewed in cross section through the damping device (12), has an outer circumferential contour deviating from the circular form, an outer damper part (14), encompassing the inner damper part (13) and having an inner circumferential contour deviating, viewed in cross section through the damping device (12), from the circular form, and an elastomeric damping material (15) disposed between the inner damper part (13) and the outer damper part (14), **characterised in that** the damping device (12) is integrated into the rear steering shaft segment (1), wherein the inner and the outer damper part (13, 14) are rotatable about the longitudinal centre axis (2) of the rear steering shaft segment, and **in that** the outer damper part has an outer circumferential contour, deviating, viewed in cross section through the damping device (12), from the circular form, with which it is in engagement under form closure, with respect to the rotational direction about the longitudinal centre axis (2), with an inner circumferential contour, deviating, viewed in cross section through the damping device (12), from the circular form, of a sleeve-shaped segment of a first shaft part (16) of the rear steering shaft segment (1).

2. Steering column according to claim 1, **characterised in that** a detent starwheel (43) of an anti-theft immobiliser is disposed on the first shaft part (16).

3. Steering column according to claim 2, **characterised in that** the detent starwheel (43) is located in an axial region of the rear steering shaft segment (1) in which is also disposed the elastic damping medium (15).

4. Steering column according to claim 1 to 3, **characterised in that** with reference to the direction of the longitudinal centre axis (2) of the rear steering shaft segment (1), the damping device (12) is at a spacing from the rear joint fork (7) of the universal joint (6), the rear joint fork (7) being connected to the rear steering shaft segment (1).

5. Steering column according to claim 4, **characterised in that** the spacing from the rear joint fork (7) is at least the diameter of the shaft part (16, 30), leading away from the rear joint fork (7), of the rear steering shaft segment (1).

6. Steering column according to one of claims 1 to 5, **characterised in that** the rear steering shaft segment (1) is rotatably supported via at least one front pivot bearing (20) which is located between the damping device (12) and the universal joint (6).

7. Steering column according to one of claims 1 to 6, **characterised in that** the rear steering shaft segment (1) is rotatably supported at least via one rear pivot bearing (19) which is located between the damping device (12) and the rear end (3) of the rear steering shaft segment (1).

8. Steering column according to one of claims 1 to 7, **characterised in that** the steering column comprises an electric power assistance device (32), wherein the damping device (12) is disposed between the rear end of the rear steering shaft segment (1) and the electric power assistance device (32).

9. Steering column according to one of claims 1 to 8, **characterised in that** the steering column is at least adjustable in its length, wherein the rear steering shaft segment (1) comprises two shaft parts (18, 23) which are telescopable with respect to one another.

10. Steering column according to one of claims 1 to 9, **characterised in that**, viewed in cross section through the damping device (12), the inner circumferential contour of the outer damper part (14) comprises several inner elevations (14a), spaced apart from one another in the circumferential direction about the longitudinal centre axis (2) of the rear steering shaft segment and projecting radially inwardly, between which inner indentations (14b) of the inner circumferential contour of the outer damper part (14) are located, and the outer circumferential contour of the inner damper part (13) comprises several outer elevations (13a) spaced apart from one another in the circumferential direction about the longitudinal centre axis (2) and projecting radially outwardly, between which outer indentations (13b) of the outer circumferential contour of the inner damper part (13) are located, wherein the outer elevations (13a) of the outer circumferential contour of the inner damper part (13) project into the inner indentations (14b) of the inner circumferential contour of the outer damper part (14).

11. Steering column according to claim 10, **characterised in that**, viewed in cross section through the damping device (12), the outer circumferential contour of the inner damper part (13) comprises curved first segments, which form the outer elevations (13a), wherein the first segments have a first radius of curvature (r1) or the outer elevations (13a) formed by the first segments are inscribed in a first radius of curvature (r1), and second segments which are located between the first segments in the regions of the outer indentations (13b) and which have a second radius of curvature (r2) greater than the first radius of curvature (r1) or extend in a straight line.

12. Steering column according to one of claims 1 to 11, **characterised in that** the first shaft part (16) projects from the damping device (12) in the axial direction of the rear steering shaft segment (1).

13. Steering column according to one of claims 1 to 12, **characterised in that** the inner damper part (13), viewed in cross section, has an inner circumferential contour, deviating from the circular form, with which it is in engagement under form closure, with respect to the rotational direction about the longitudinal centre axis (2), with an outer circumferential contour, deviating, viewed in cross section, from the circular form, of a segment of a second shaft part (17) of the rear steering shaft segment (1), wherein the second shaft part (17) projects from the damping device (12) in the axial direction of the rear steering shaft segment (1).

14. Steering column according to one of claims 1 to 13, **characterised in that** the second shaft part (17) is connected in a rotatably fixed manner with a third shaft part (18), wherein the third shaft part (18) projects from the second shaft part (17) in the axial direction of the rear steering shaft segment (1).

## Revendications

1. Colonne de direction pour un véhicule à moteur, comportant un arbre de direction, lequel comporte une section arrière (1) d'arbre de direction, qui s'étend en ligne droite, peut tourner autour d'un axe longitudinal médian (2) et à l'extrémité arrière (3) de laquelle peut être monté un volant (4), et au moins une autre section (10) d'arbre de direction qui est reliée à la section arrière (1) d'arbre de direction par un joint de cardan (6), lequel comporte une fourchette d'articulation arrière (7), une fourchette d'articulation avant (8) et un croisillon (9) reliant la fourchette d'articulation arrière (7) et la fourchette d'articulation avant (8), un dispositif d'amortissement (12) étant prévu pour amortir les vibrations transmises par l'arbre de direction, lequel dispositif comprend un élément amortisseur interne (13) présentant un contour périphérique externe différent de la forme circulaire, vu en coupe transversale à travers le dispositif d'amortissement (12), un élément amortisseur externe (14), qui entoure l'élément amortisseur interne (13) et qui présente un contour périphérique interne différent de la forme circulaire, vu en coupe transversale à travers le dispositif d'amortissement (12), et un matériau d'amortissement (15) élastomère disposé entre l'élément amortisseur interne (13) et l'élément amortisseur externe (14), **caractérisée en ce que** le dispositif d'amortissement (12) est intégré dans la section arrière (1) d'arbre de direction, l'élément amortisseur interne et l'élément amortisseur externe (13, 14) pouvant tourner autour de l'axe longitudinal médian (2) de la section arrière d'arbre de direction, et **en ce que** l'élément amortisseur externe (14) présente un contour périphérique externe différent de la forme circulaire, vu en coupe transversale à travers le dispositif d'amortissement (12), avec lequel l'élément amortisseur externe est en contact par coopération de formes par rapport au sens de rotation autour de l'axe longitudinal médian (2) avec un contour périphérique interne différent de la forme circulaire, vu en coupe transversale à travers le dispositif d'amortissement (12), d'une section en forme de manchon d'une première partie d'arbre (16) de la section arrière (1) d'arbre de direction.

2. Colonne de direction selon la revendication 1, **caractérisée en ce qu'**une roue à encoches (43) d'un dispositif d'immobilisation est agencée sur la première partie d'arbre (16).

3. Colonne de direction selon la revendication 2, **caractérisée en ce que** la roue à encoches (43) se situe dans une zone axiale de la section arrière (1) d'arbre de direction, dans laquelle se situe également le moyen d'amortissement élastique (15).

4. Colonne de direction selon l'une quelconque des revendications 1 à 3, **caractérisée en ce que** le dispositif d'amortissement (12) présente, par rapport à la direction de l'axe longitudinal médian (2) de la section arrière (1) d'arbre de direction, un écart avec la fourchette d'articulation arrière (7), raccordée à la section arrière (1) d'arbre de direction, du joint de cardan (6).

5. Colonne de direction selon la revendication 4, **caractérisée en ce que** l'écart avec la fourchette d'articulation arrière (7) atteint au moins le diamètre de la partie d'arbre (16, 30), se poursuivant à partir de la fourchette d'articulation arrière (7), de la section arrière (1) d'arbre de direction.

6. Colonne de direction selon l'une quelconque des revendications 1 à 5, **caractérisée en ce que** la section arrière (1) d'arbre de direction est montée en rotation par l'intermédiaire d'au moins un coussinet de pivotement avant (20), lequel se situe entre le dispositif d'amortissement (12) et le joint de cardan (6).

7. Colonne de direction selon l'une quelconque des revendications 1 à 6, **caractérisée en ce que** la section arrière (1) d'arbre de direction est montée en rotation par l'intermédiaire d'au moins un coussinet de pivotement arrière (19), lequel se situe entre le dispositif d'amortissement (12) et l'extrémité arrière (3) de la section arrière (1) d'arbre de direction.

8. Colonne de direction selon l'une quelconque des revendications 1 à 7, **caractérisée en ce que** la colonne de direction comprend un servomécanisme électrique (32), le dispositif d'amortissement (12) étant disposé entre l'extrémité arrière de la section arrière (1) d'arbre de direction et le servomécanisme électrique (32).

9. Colonne de direction selon l'une quelconque des revendications 1 à 8, **caractérisée en ce que** la colonne de direction est mobile au moins dans sa longueur, la section arrière (1) d'arbre de direction comprenant deux parties d'arbre (18, 23) télescopiques l'une par rapport à l'autre.

10. Colonne de direction selon l'une quelconque des revendications 1 à 9, **caractérisée en ce que**, vu en coupe transversale à travers le dispositif d'amortissement (12), le contour périphérique interne de l'élément amortisseur externe (14) comporte plusieurs élévations internes (14a), qui font saillie radialement vers l'intérieur, qui sont espacées les unes des autres dans la direction périphérique autour de l'axe longitudinal médian (2) de la section arrière d'arbre de direction, et entre lesquelles se situent des creux internes (14b) du contour périphérique interne de l'élément amortisseur externe (14), et le contour périphérique externe de l'élément amortisseur interne (13) comprend plusieurs élévations externes (13a), qui font saillie radialement vers l'extérieur, qui sont espacées les unes des autres dans la direction périphérique autour de l'axe longitudinal médian (2), et entre lesquelles se situent des creux externes (13b) du contour périphérique externe de l'élément amortisseur interne (13), les élévations externes (13a) du contour périphérique externe de l'élément amortisseur interne (13) faisant saillie dans les creux internes (14b) du contour périphérique interne de l'élément amortisseur externe (14).

11. Colonne de direction selon la revendication 10, **caractérisée en ce que**, vu en coupe transversale à travers le dispositif d'amortissement (12), le contour périphérique externe de l'élément amortisseur interne (13) présente des premières sections courbes, lesquelles forment les élévations externes (13a), les premières sections possédant un premier rayon de courbure (r1) ou les élévations externes (13a) formées par les premières sections étant inscrites dans un premier rayon de courbure (r1), et des deuxièmes sections, lesquelles se situent entre les premières sections dans les zones des creux externes (13b) et lesquelles possèdent un deuxième rayon de courbure (r2) qui est plus grand que le premier rayon de courbure (r1), ou lesquelles s'étendent en ligne droite.

12. Colonne de direction selon l'une quelconque des revendications 1 à 11, **caractérisée en ce que** la première partie d'arbre (16) fait saillie du dispositif d'amortissement (12) dans la direction axiale de la section arrière (1) d'arbre de direction.

13. Colonne de direction selon l'une quelconque des revendications 1 à 12, **caractérisée en ce que** l'élément amortisseur interne (13) présente un contour périphérique interne différent de la forme circulaire, vu en section transversale, avec lequel il est en contact par coopération de formes, par rapport au sens de rotation autour de l'axe longitudinal médian (2), avec un contour périphérique externe différent de la forme circulaire, vu en coupe transversale, d'une section d'une deuxième partie d'arbre (17) de la section arrière (1) d'arbre de direction, la deuxième partie d'arbre (17) faisant saillie du dispositif d'amortissement (12) dans la direction axiale de la section arrière (1) d'arbre de direction.

14. Colonne de direction selon l'une quelconque des revendications 1 à 13, **caractérisée en ce que** la deuxième partie d'arbre (17) est reliée solidaire en rotation à une troisième partie d'arbre (18), la troisième partie d'arbre (18) faisant saillie de la deuxième partie d'arbre (17) dans la direction axiale de la section arrière (1) d'arbre de direction.
